# EUROPEAN PATENT APPLICATION

(11) **EP 3 406 863 A1**
(43) Date of publication of application: **28.11.2018**
(21) Application number: 17172336.4
(22) Date of filing: 23.05.2017
(51) Int. Cl.: F01D 25/28, G01N 3/00

(54) **ROTOR BLADE MANUFACTURING AND TESTING METHOD**

(71) Applicant: Siemens Aktiengesellschaft, 80333 München (DE)
(72) Inventor: OSBORNE, Mark, Harmston, Lincoln, LN5 9SL (GB); PAN, Wenke, Welton, Lincoln, LN2 3UB (GB)
(74) Representative: Maier, Daniel Oliver

(57) **Abstract**

A method of manufacturing a rotor blade (100) for a turbo machine, in which the rotor blade design has a root portion (106), and an aerofoil portion (104) which extends from the root portion (106). The method comprises the steps of determining desired physical strength of the root portion (106) of the rotor blade (100), and producing a test piece (110) by an additive manufacturing technique. The test piece (110) comprises a root portion (112) which has the same design as the root portion (106) of the rotor blade (100), and a tool body (116) which extends from the root portion (112). The method further comprises determining physical strength of the test piece root portion (112) by fixing the root portion (112) in a receiving part (114), and exerting a force on the tool body (116), then comparing the determined physical strength of the root portion (112) to the desired physical strength of the root portion (106) of the rotor blade design (100) to determine if the root portion (112) has the desired physical strength.

## Description

The present disclosure relates to a manufacturing method.

In particular the disclosure is concerned with a method of manufacturing a rotor blade for a turbo machine involving the steps of testing the rotor blade design using a test piece.

### Background

Gas turbines generally include a rotor with a number of rows of rotating rotor blades which are fixed to a rotor shaft and rows of stationary vanes between the rows of rotor blades which are fixed to the casing of the gas turbine. When a hot and pressurized working fluid flows through the rows of vanes and blades it transfers momentum to the rotor blades and thus imparts a rotary motion to the rotor while expanding and cooling. The vanes are used to control the flow of the working medium so as to optimize momentum transfer to the rotor blades.

A typical gas turbine rotor blade comprises a root portion by which it is fixed to the rotor shaft, and an aerodynamically formed aerofoil portion which allows a transfer of momentum when the hot and pressurized working fluid flows along the aerofoil section.

Rotor blades tend to be hollow, for example comprising a plenum through which cooling air is forced. The plenum may be divided by internal walls which are formed integrally with the aerofoil structure. The rotor blades may be produced by a precise casting, checking and finishing process, which is necessarily labour intensive in order to ensure that all the features of the rotor blades have been produced according to a pre-determined and desired design.

Although the casting process is critical, the manufacturing process includes many other steps prior to casting stage. For example prior to manufacture of "production" standard rotor blades, development designs considered and refined through the design and manufacturing process must be extensively modelled and empirically tested before entering the production phase of the manufacturing process.

Conventionally, development rotor blades are produced by the same processes as production parts (e.g. casting), which is time-consuming and expensive. Before the operational characteristics of the development rotor blade can be assessed, it must first be analysed to determine if it meets basic structural integrity requirements. If such analysis indicates that a design flaw exists, then a replacement development part must be manufactured using the same conventional (and perhaps) time-consuming manufacturing process. The replacement development part must then also be subject to the same structural integrity analysis, and so the process is repeated until the development part may proceed to more extensive testing which ultimately will lead to the production of a rotor blade part that can be used in service in a turbo machine.

Hence conventional manufacturing methods including technical verification steps are necessarily thorough, but also can lead to significant delay if modifications to the design are required, as these modifications must also be tested before the manufacturing method can move from the development to production phase.

Hence a method of manufacturing a rotor blade for a turbo machine, and a test piece component used as part of the manufacturing process, which reduces the amount of time taken to test design modifications, are highly desirable.

### Summary

According to the present disclosure there are provided a method and apparatus as set forth in the appended claims. Other features of the invention will be apparent from the dependent claims, and the description which follows.

Accordingly there may be provided a method of manufacturing a rotor blade 100 for a turbo machine. The rotor blade design may have a root portion 106 an aerofoil portion 104 which extends from the root portion 106. The method may comprise the steps of determining desired physical strength of the root portion 106 of the rotor blade 100 and producing a test piece 110 by an additive manufacturing technique. The test piece 110 may comprise : a root portion 112 which has the same design as the root portion 106 of the rotor blade 100, and a tool body 116 which extends from the root portion 112, wherein the tool body 116 has a higher material strength than the root portion. The tool body 116 may have a higher material strength than the aerofoil portion of the rotor blade 100. The method may further comprise determining physical strength of the test piece root portion 112 by fixing the root portion 112 in a receiving part 114, and exerting a force on the tool body 116. The method may also comprise comparing the determined physical strength of the root portion 112 to the desired physical strength of the root portion 106 of the rotor blade design 100 to determine if the root portion 112 has the desired physical strength. The method may also comprise manufacturing the rotor blade 100 by an additive manufacturing technique.

The receiving part 114 may have a root attachment region 128 to receive the root portion 112, the root attachment region 128 having the same design as a root attachment region 109 on a turbine disc design 102 configured to receive the rotor blade 100.

Determining physical strength of the root portion 112 by exerting a force on the tool body 116 may comprise the step of conducting a "pull test" on the test piece 110, wherein the force on the tool body 116 is in a direction in opposition to the root portion 112 engagement in the root receiving part 114, so as to determine the amount of force required to remove the root portion 112 from the attachment region 128 of the receiving part 114.

The tool body 116 may have a different design to the aerofoil portion 104 of the rotor blade design 100.

The tool body 116 may comprise a head portion 118.

The tool body 116 may further comprise a transition portion 120 between the tool head portion 118 and the root portion 112.

The head portion 118 may be substantially cuboid.

The head portion 118 may be provided with an engagement feature 122 for engagement with a tool 124 for applying a force to the test piece 110.

The engagement feature 122 may be a passage 126 which extends through the tool body 116.

There may also be provided a test piece 110 for testing physical strength of a rotor blade design for a turbo machine, the test piece comprising: a root portion 112; and a tool body 116 which extends from the root portion 112.

The test piece 110 and rotor blade may be manufactured by an additive manufacturing process.

The tool body 116 of the test piece 110 may comprise: a head portion 118, and a transition portion 120 between tool head portion 118 and the root portion 112.

The root portion 112 may have the same design as a root portion of a rotor blade design; and the tool body 116 may have a higher strength than the root portion.

The head portion 118 of the test piece 110 may be substantially cuboid.

The head portion 118 may be provided with an engagement feature 122 for engagement with a tool 124 for applying a force to the test piece 110; and the engagement feature 122 may be provided as a passage 126 which extends through the tool body 116.

A passage 130 may extend through the root portion 112 into the transition portion 120. The passage 130 may open onto a surface of the root portion 112. The passage 130 may terminate in the transition portion 120. The passage 130 may terminate substantially at the boundary between the root portion 112 and the transition portion 120.

There may also be provided a method of generating a design for a rotor blade for a turbo machine. The rotor blade design may have a root portion and an aerofoil portion which extends from the root portion. The method may comprise the step of determining desired physical properties of the root portion of the rotor blade design and providing a test piece for empirical analysis of the root portion. The test piece may comprise : a root portion which has the same design as the root portion of the rotor blade and a tool body which extends from the root portion. The tool body may have a higher material strength than the aerofoil portion of the rotor blade. The tool body may have a higher material strength than the root portion of the rotor blade. The tool body may have a higher material strength than the root portion of the test piece. The method may further comprise the steps of fixing the root portion of the test piece in a receiving part, determining physical properties of the root portion by exerting a force on the tool body, and comparing the determined physical properties of the test piece root portion to the desired physical properties of the root portion of the rotor blade design to thereby determine if the root portion design has the desired physical properties.

Hence there is provided a method of manufacturing of a rotor blade for turbo machinery, which may include the steps of producing a development rotor blade for development testing, and steps of producing a test piece for initial testing of features of the development rotor blade root design.

### Brief Description of the Drawings

Examples of the present disclosure will now be described with reference to the accompanying drawings, in which:
Figure 1 shows a schematic representation of an example of a turbo machine;
Figure 2 shows an enlarged region of a section of a turbine of the turbo machine shown in Figure 1;
Figure 3 shows an end view of the rotor blades shown in Figures 1, 2;
Figure 4 shows a test piece according to the present disclosure; and
Figures 5, 6 show an isometric view of the test piece shown in Figure 4.

### Detailed Description

The present invention relates to a method of manufacture of a rotor test blade for a turbo machine, including a method of manufacture for a development (or "test") rotor blade for a turbo machine, as well as a method of generating a design for a rotor blade for a turbo machine and a test piece for testing physical properties of a rotor blade design for a turbo machine.

Hence the present disclosure relates to a development method and design method which comprise the steps of designing a test piece for empirical testing of a feature of the development rotor blade root, making the test piece, and testing the test piece to study one or more characteristics of the development rotor blade using the test piece.

The present disclosure also relates to the process of designing the rotor blade , including the design of a development rotor blade for verifying a final production rotor blade, and testing thereof.

The manufacturing method of the present disclosure also relates to generating a rotor blade design, and producing a test piece by a manufacturing technique which is faster than conventional manufacturing techniques, so that the test piece can be tested to verify characteristics of the rotor blade root design.

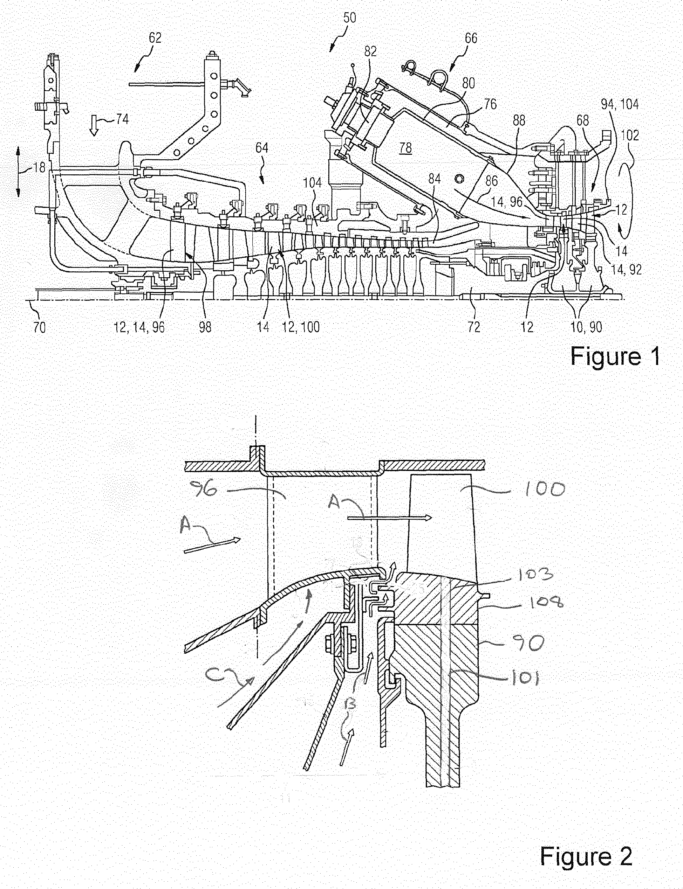

By way of context, Figure 1 shows an example of a gas turbine engine 60 in a sectional view, which illustrates the nature of rotor blades and the environment in which they operate. The gas turbine engine 60 comprises, in flow series, an inlet 62, a compressor section 64, a combustion section 66 and a turbine section 68, which are generally arranged in flow series and generally in the direction of a longitudinal or rotational axis 70. The gas turbine engine 60 further comprises a shaft 72 which is rotatable about the rotational axis 70 and which extends longitudinally through the gas turbine engine 60. The rotational axis 70 is normally the rotational axis of an associated gas turbine engine. Hence any reference to "axial", "radial" and "circumferential" directions are with respect to the rotational axis 70.

The shaft 72 drivingly connects the turbine section 68 to the compressor section 64. In operation of the gas turbine engine 60, air 74, which is taken in through the air inlet 62 is compressed by the compressor section 64 and delivered to the combustion section or burner section 66. The burner section 66 comprises a burner plenum 76, one or more combustion chambers 78 defined by a double wall can 80 and at least one burner 82 fixed to each combustion chamber 78. The combustion chambers 78 and the burners 82 are located inside the burner plenum 76. The compressed air passing through the compressor section 64 enters a diffuser 84 and is discharged from the diffuser 84 into the burner plenum 76 from where a portion of the air enters the burner 82 and is mixed with a gaseous or liquid fuel. The air/fuel mixture is then burned and the combustion gas 86 or working gas from the combustion is channelled via a transition duct 88 to the turbine section 68.

The turbine section 68 may comprise a number of blade carrying discs 90 or turbine wheels attached to the shaft 72. In the example shown, the turbine section 68 comprises two discs 90 which each carry an annular array of turbine assemblies 12, which each comprises an aerofoil 14 embodied as a turbine blade 100. Turbine cascades 92 are disposed between the turbine blades 100. Each turbine cascade 92 carries an annular array of turbine assemblies 12, which each comprises an aerofoil 14 in the form of guiding vanes (i.e. stator vanes 96), which are fixed to a stator 94 of the gas turbine engine 60.

Figure 2 shows an enlarged view of a stator vane 96 and rotor blade 100. Arrows "A" indicate the direction of flow of combustion gas 86 past the aerofoils 96,100. Arrows "B" show air flow passages provided for sealing, and arrows "C" indicate cooling air flow paths for passing through the stator vanes 96. Cooling flow passages 101 may be provided in the rotor disc 90 which extend radially outwards to feed an air flow passage 103 in the rotor blade 100.

The combustion gas 86 from the combustion chamber 78 enters the turbine section 58 and drives the turbine blades 100 which in turn rotate the shaft 72 to drive the compressor. The guiding vanes 96 serve to optimise the angle of the combustion or working gas 86 on to the turbine blades.

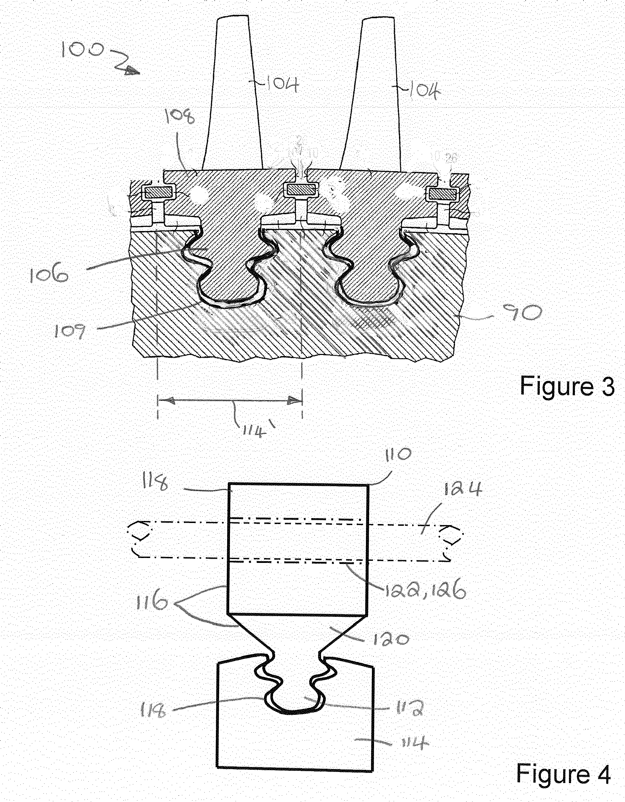

Figure 3 shows a view of the rotor blades 100 looking upstream facing the flow "A" shown in Figure 2.

Each rotor blade 100 comprises an aerofoil portion 104, a root portion 106 and a platform 108. The platform 108 is located between the aerofoil portion 104 and the root portion 106. The rotor blades 100 are fixed to the rotor disc 102 by means of their root portions 106. The root portions 106 have a shape that corresponds to notches (or grooves) 109 in the rotor disc 90, and are configured to prevent the rotor blade 100 from detaching from the rotor disc 102 in a radial direction as the rotor disc 102 spins. The root portion 106 and notches 109 are hence configured to resist huge centrifugal forces during operation of the engine. The present disclosure relates to the design, testing and manufacture of the root portion features of rotor blades and notch features of rotor discs.

Figures 4, 5, 6 shows a test piece 110 according to the present disclosure. The test piece 110 is configured for testing physical properties (for example strength) of a rotor blade for a turbo machine. In particular the test piece 110 is configured for testing physical properties (for example strength) of a rotor blade root for a turbo machine. That is to say, the test piece 110 is configured for testing physical properties of a development and/or production rotor blade root design.

The test piece 110 comprises a root portion 112 for linking with a receiving part 114. That is to say, the root portion 112 has the same design (that is to say the same size and geometry) as a root portion of a rotor blade design which it is configured to simulate for the purposes of development testing.

The root portion 112 or the test piece 110 may vary in features and relative dimensions to that shown in Figure 4, but in practice will match in size, geometry and tolerance the blade root design of the development rotor blade design.

The test piece 110 shown in Figures 4, 5, 6 further comprises a tool body 116 which extends from the root portion 112. The tool body 116 comprises a head portion 118 and a transition portion 120 between the tool head portion 118 and the root portion 112.

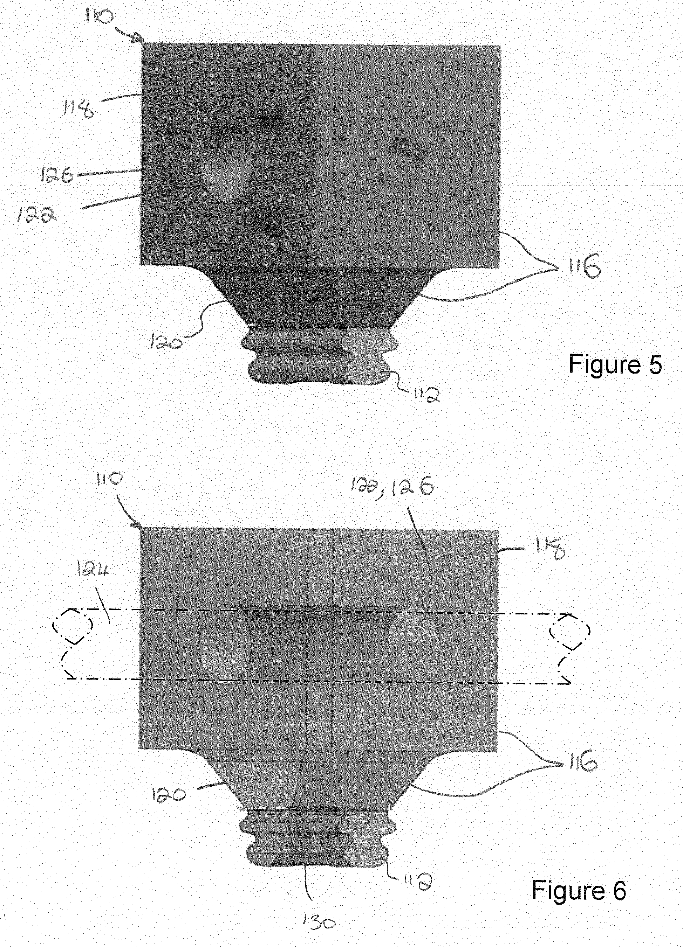

As shown in Figures 5, 6 the head portion 118 may be substantially cuboid and the transition portion 120 may be substantially frusto pyramidical in that it extends from the root portion 112 up to the base of the head portion 118. As shown in Figure 6, a passage 130 may extend through the root portion 112 into the transition portion 120. The or each passage 130 is provided to simulate the air flow passage 103 of the development rotor blade design. That is to say, the or each "air flow" passage 130 will be of the same shape, size and geometry as the or each air flow passage 103 in the root portion of the development rotor blade design, and are provided to ensure that the root portion 112 has the same structural properties as the development root blade design so that in a test it may behave in the same way as the root of the development rotor blade. The passage 130 may terminate in the transition portion 120. The air flow passages 130 may terminate only a short distance into the transition region 120 or head portion 118. The passage 130 may terminate substantially at the boundary between the root portion 112 and the transition portion 120. The passage 130 may open onto a surface of the root portion 112. Hence the passage 130 may be open where it extends from the surface of the root portion 112, and closed where it terminates.

The tool body 116 has a higher strength than that of the blade root of the development rotor blade design, and hence the tool body 116 also has a higher material strength than the test piece root portion 112. Additionally the tool body 116 has a different design (that is to say, has a different size and geometry) relative to the aerofoil portion of the development rotor blade design. For example, the head portion 118, as shown in Figure 4, may be substantially cuboid, although of course may have a different shape to that shown. However a cuboid shape is advantageous for the test piece 110 due to its relative simplicity to manufacture and the inherent strength it provides.

The head portion 118 may be provided with an engagement feature 122 for engagement with a tool 124 for applying a force to the test piece 110. That is to say the tool 124 enables engagement with the head portion so that a force may be applied to the root portion 112 via the head portion 118 and transition portion 120.

In the example shown the engagement feature 122 is provided as a passage 126 which extends through the tool body 116. In another example the engagement feature 122 may comprise a surface of the head portion 118, such that it is configured to be clamped by a tool for exerting a force on the root portion 112 via the head portion 118 and transition portion 116.

In the example shown the tool 124 is a rod which extends through the passage 126, and may in turn be connected to a device operable to pull the test piece 110 away from the receiving part 114, simulating the radial/ centrifugal forces the rotor blade will experience in operation.

The root portion 112 is located within a receiving groove 128 provided in the receiving part 114. The receiving groove 128 is provided with the same design, geometry and tolerances as the equivalent groove in the turbo machinery design which is being simulated.

Hence, for example, the receiving part 114 shown in Figure 4 may be configured to simulate a section 114' of a rotor disc 90 akin to that shown in Figure 3, where the section 114' extends to either side of a root groove 109 provided in the disc 90. The geometry and relative dimensions of the blade root 112 and rotor disc groove 128 for receiving the blade root 112 are shown for illustrative purposes only, and are not limited to the illustrated design of the test piece 110 of the present disclosure, nor the rotor blade 100, turbine disc 90 or receiving part 114 designs illustrated in the present disclosure.

The test piece 110 is manufactured by the same technique as used (or planned to be used) for the development rotor blade. Although the final production part may be manufactured by a further manufacturing process, for example a conventional casting process, the test piece and development rotor blade of the present disclosure may be manufactured by an additive manufacturing process.

Additive manufacturing refers to processes used to create a three dimensional object in which layers of material are formed, under computer control, to create an object. Additive manufacturing, for example selective laser melting, provides a quick way to create an object for testing. Hence the test piece and development rotor blade may be manufactured by selective laser melting, or a different additive manufacturing technique.

Put another way, the test piece comprises features (for example a root portion) common to the development rotor blade, and both are manufactured by an additive manufacturing process. Thus the test piece and development rotor blade can be manufactured relatively quickly compared to a conventional casting process. Although the final production rotor blade design may be produced with a conventional casting process, it may also be produced by an alternative manufacturing process for example the production rotor blade may also be manufactured by an additive manufacturing process.

Hence the present invention provides a means for testing features of a development part such that the development part may proceed more quickly to evaluation. Thus additive manufacturing allows the test piece to be manufactured and replacement test pieces manufactured equally quickly to respond to any design modifications required during evaluation of the rotor blade features.

Hence there is provided a method of manufacturing a rotor blade for a turbo machine, where the rotor blade may be a development rotor blade configured to have the same design shape and geometry as a production rotor blade for the turbo machine. The method of manufacturing includes the step of verifying the rotor blade design, and in particular the method of manufacturing includes the step of verifying the rotor blade root design. Hence the method comprises a step of determining desired physical properties of a root portion of a rotor blade design.

The method further comprises the step of manufacturing the test piece 110, as described above, by an additive manufacturing technique. The tool body 116 is configured to have a higher strength than the root portion 112 of the test piece 110, and hence also higher than the strength of the rotor blade root design. This is so that, during testing, it is the root portion 112 which will fail in preference to the tool body portion 116.

The method also comprises the steps of determining physical properties of the test piece root portion by fixing the root portion 112 in the receiving part 114 and exerting a force on the tool body 116, for example by using the rod 124 or other type tool to exert a force. However the force is exerted, the determined physical properties of the root portion 112 of the test piece 110 demonstrates the actual physical properties of the root portion 106 of the development rotor blade design. Hence it is determined if the root portion 112 of the test piece 110 has the desired physical properties of the development rotor blade design. Thus informed by the comparison, the development rotor blade may be manufactured by an additive manufacturing technique to the rotor blade design.

Put another way, the root portion 112 of the test piece 100 is tested to verify that the root portion 106 of the rotor blade design meets certain criteria. Once it is determined that those criteria are met, the development rotor blade may be manufactured by an additive manufacturing technique in order to provide a development rotor blade, which is of the same design as the intended production rotor blade, thus enabling testing of features of the production blade design by testing the same feature of the development rotor blade made by additive manufacturing.

The method further comprises the step of providing the receiving part 114 as previously described, suitable for use with the test piece 110.

The step of determining physical properties of the root portion 112 of the test piece 110 by exerting a force on the tool body 116 comprises the step of conducting a "pull test" on the test piece 110 so as to determine the amount of force required to remove the root portion 112 from the attachment region 128 of the receiving part 114.

The force on the tool body during the "pull test" is in a direction in opposition to the engagement of the root portion 112 of the tool body 110 in the root receiving part 114. Hence it simulates radial/centrifugal forces that may experienced by the rotor blade relative to its respective rotor disc when in operation. The force may be applied by a standard tensile test machine.

Thus a rotor blade design may be manufactured, that is to say "reduced to practice", by means of testing on a test piece 110, where the test piece has a feature (the root portion 112) which has the same geometry, size and shape as the root portion 106 on the rotor blade design. Having determined the desired physical properties of the root portion 106 of the rotor blade 100, and gathered information on the physical characteristics of the root portion 112 of the test piece 110 by virtue of an empirical experiment (for example a pull test) it can be determined if the root portion 106 of the rotor blade 100 has necessary physical characteristics in order to increase confidence in the capability of the development rotor blade design comprising the root portion design to be manufactured and tested.

Since the test piece 110 and the development rotor blade are produced by an additive manufacturing technique, they may be produced relatively quickly. Hence if testing of the test piece 110 reveals a design flaw, the root portion 112 can be modified and created by additive manufacturing until a test piece design with the desired properties has been created. The desired features of the test piece design can then be utilised in creating the design of the development rotor blade, which is also produced by additive manufacturing, and then the development rotor blade itself may be tested in a variety of ways to determine if it meets predetermined structural and operational requirements.

Hence the method of manufacturing includes a method of generating a design for a rotor blade for a turbo machine. The method of generating a design may include the step of producing the test piece 110 for empirical analysis of the root portion 112, the test piece 110 comprising some, but not all, of the features of the defined rotor blade design, and analysing features of the root portion.

Thus the rotor blade design may be verified. A final production design may then be produced on the basis of this verification process. The production blade may be manufactured by an additive manufacturing technique, or an alternative manufacturing technique (for example a conventional casting process).

Hence there is provided a method of manufacture of a rotor blade for turbo machinery, which may include the steps of producing a development rotor blade for development testing, and steps of producing a test piece for initial testing of features of the development rotor blade design.

Provision of a test piece 110 and receiving part 114 by an additive manufacturing technique massively simplifies the test of the critical mounting features of the rotor blade design. The test piece is not configured for all types of testing for the rotor blade design, rather it is intended to determine physical properties of the root portion of the rotor blade design. However, the development rotor blade made by additive manufacturing technique may be used in a wider range of blade testing, for example rotational and thermal testing, and even engine testing. Hence the provision of a test piece by an additive manufacturing technique, according to the present disclosure, as part of the manufacturing method allows for greater confidence that the development rotor blade has adequate structural integrity to stay mounted to the rotor disc.

Increased confidence that the rotor blade will survive testing is important as it may reduce development times and avoid risk of damage to test equipment, especially in instances where the development blade is intended for use in an over speed test.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of manufacturing a rotor blade (100) for a turbo machine:
the rotor blade design having:
a root portion (106), and
an aerofoil portion (104) which extends from the root portion (106);
the method comprising the steps of:
a. determining desired physical strength of the root portion (106) of the rotor blade (100);
b. producing a test piece (110) by an additive manufacturing technique;
the test piece (110) comprising :
a root portion (112)
which has the same design as the root portion (106) of the rotor blade (100); and
a tool body (116) which extends from the root portion (112),
the tool body (116) having a higher material strength than the root portion;
c. determining physical strength of the test piece root portion (112) by :
i. fixing the root portion (112) in a receiving part (114), and
ii. exerting a force on the tool body (116)
d. comparing the determined physical strength of the root portion (112) to the desired physical strength of the root portion (106) of the rotor blade design (100) to determine if the root portion (112) has the desired physical strength; and
e. manufacturing the rotor blade (100) by an additive manufacturing technique.

2. A method as claimed in claim 1 wherein:
the receiving part (114) has a root attachment region (128) to receive the root portion (112)
having the same design as a root attachment region (109) on a turbine disc design (102) configured to receive the rotor blade (100).

3. A method as claimed in claim 1 or claim 2 wherein :
determining physical strength of the root portion (112) by exerting a force on the tool body (116)
comprises the step of conducting a "pull test" on the test piece (110),
wherein the force on the tool body (116) is in a direction in opposition to the root portion (112) engagement in the root receiving part (114),
so as to determine the amount of force required to remove the root portion (112) from the attachment region (128) of the receiving part (114).

4. A method as claimed in any one of claims 1 to 3 wherein
the tool body (116) has a different design to the aerofoil portion (104) of the rotor blade design (100).

5. A method as claimed in any one of claims 1 to 4 wherein
the tool body (116) comprises:
a head portion (118), and
a transition portion (120) between the tool head portion (118) and the root portion (112).

6. A method as claimed in claim 5 wherein
the head portion (118) is substantially cuboid.

7. A method as claimed in any one of claims 5,6 wherein
the head portion (118) is provided with an engagement feature (122) for engagement with a tool (124) for applying a force to the test piece (110).

8. A method as claimed in claim 7 wherein
the engagement feature (122) is a passage (126) which extends through the tool body (116).

9. A test piece (110) for testing physical strength of a rotor blade design for a turbo machine,
the test piece comprising :
a root portion (112); and
a tool body (116) which extends from the root portion (112).

10. A test piece (110) as claimed in claim 9 wherein
the test piece and rotor blade are manufactured by an additive manufacturing process.

11. A test piece (110) as claimed in claims 9, 10 wherein:
the tool body (116) comprises :
a head portion (118), and
a transition portion (120) between tool head portion (118) and the root portion (112).

12. A test piece (110) as claimed in any one of claims 9 to 11 wherein
the root portion (112) has the same design as a root portion of a rotor blade design; and
the tool body (116) has a higher strength than the root portion.

13. A test piece (110) as claimed in claim 11 or claim 12 wherein
the head portion (118) is substantially cuboid.

14. A test piece (110) as claimed in any one of claims 11 to 13 wherein
the head portion (118) is provided with an engagement feature (122) for engagement with a tool (124) for applying a force to the test piece (110); and
the engagement feature (122) is provided as a passage (126) which extends through the tool body (116).

15. A test piece (110) as claimed in any one of claims 9 to 14 wherein
a passage (130) extends through the root portion (112) into the transition portion (120).
